# EUROPÄISCHE PATENTSCHRIFT

(11) **EP 3 484 607 B1**
(45) Veröffentlichungstag und Bekanntmachung des Hinweises auf die Patenterteilung: **15.04.2020**
(21) Anmeldenummer: 17742661.6
(22) Anmeldetag: 04.07.2017
(51) Int. Cl.: B01J 8/00, B01J 8/02, C01B 3/38

(54) **KOMPAKTER METHANOLREFORMER FÜR EIN UNTERSEEBOOT**
COMPACT METHANOL REFORMER FOR A SUBMARINE
REFORMEUR DE MÉTHANOL COMPACT POUR SOUS-MARIN

(30) Priorität: 13.07.2016 DE 102016212757
(43) Veröffentlichungstag der Anmeldung: 22.05.2019
(73) Patentinhaber: thyssenkrupp Marine Systems GmbH, 24143 Kiel (DE); thyssenkrupp AG, 45143 Essen (DE)
(72) Erfinder: KRUMMRICH, Stefan, 24634 Padenstedt (DE); PEIN, Marc, 24147 Kiel (DE); RUSER, Dennis, 24211 Preetz (DE)
(74) Vertreter: thyssenkrupp Intellectual Property GmbH
(86) Internationale Anmeldenummer: PCT/EP2017/066693
(87) Internationale Veröffentlichungsnummer: WO 2018/011026

(56) Entgegenhaltungen:
- DE-A1- 10 346 267
- US-A1- 2010 254 891

## Beschreibung

Die Erfindung betrifft einen Methanolreformer zur Erzeugung von Wasserstoff zur Verwendung in einer Brennstoffzelle, insbesondere zur Verwendung des Methanolreformers an Bord eines Wasserfahrzeugs, insbesondere an Bord eines Unterseeboots.

Moderne Unterseeboote, beispielsweise Unterseeboot der Klasse U 212A, verfügen zur Energieerzeugung eine Brennstoffzelle. Hierdurch ist eine Energieerzeugung außenluftunabhängig, also insbesondere bei getauchtem Unterseeboot, möglich. Dafür wird derzeit der Wasserstoff in Methallhydridspeichern transportiert, was ein gefahrloses Mitführen von Wasserstoff ermöglicht.

Für größere Unterseeboote als die Boote der Klasse U 212A kann es jedoch sinnvoll sein, anstelle von Metallhydridspeichern auf Methanol zurückzugreifen. Nachteil ist, dass zusätzlich ein Reformer an Bord untergebracht werden muss. Zusätzlich muss auch der Reformer den Anforderungen zum Einbau in ein Unterseeboot, insbesondere in Bezug auf Kompaktheit und Robustheit, entsprechen.

Aus der US 2010 / 0254891 A1 ist ein Wärmeaustauschreaktor bekannt, welcher parallele Röhren aufweist.

Aus der WO 2009 / 141 517 A1 ist ein Wärmetauschreaktor bekannt, welcher parallele Röhren aufweist.

Aus der US 2006 / 0248800 A1 ist ein Reaktor für die Dampfreformierung bekannt.

Aus der US 3,172,739 A ist ein Reformer für Kohlenwasserstoffe bekannt.

Aus der EP 1 679 111 A2 ist eine Membran für einen Dampfreformer bekannt.

Aus der DE 103 46 267 A1 ist eine Vorrichtung zur Dampfreformierung zur Wasserstofferzeugung in einer mobilen Einrichtung bekannt,
Aufgabe der Erfindung ist es, einen kompakten Methanolreformer bereitzustellen, welcher für den Einsatz in einem Unterseeboot geeignet ist.

Gelöst wird diese Aufgabe durch einen Methanolreformer mit den in Anspruch 1 angegebenen Merkmalen. Vorteilhafte Weiterbildungen ergeben sich aus den Unteransprüchen, der nachfolgenden Beschreibung sowie den Zeichnungen.

Der erfindungsgemäße Methanolreformer weist einen Reaktionsbereich, einen Beschickungsbereich und einen Auslassbereich auf, wobei der Reaktionsbereich, der Beschickungsbereich und der Auslassbereich übereinander angeordnet sind. Der Reaktionsbereich ist unten angeordnet. Somit ist sowohl der Beschickungsbereich als auch der Auslassbereich oberhalb des Reaktionsbereichs angeordnet. Im Reaktionsbereich ist wenigstens ein erstes koaxiales Reaktionsrohr senkrecht angeordnet, wobei das wenigstens eine erste koaxiale Reaktionsrohr einen äußeren Rohrbereich und einen inneren Rohrbereich aufweist. Der äußere Rohrbereich ist mit dem Beschickungsbereich verbunden und der innere Rohrbereich ist mit dem Auslassbereich verbunden.

Durch diese Bauweise ergibt sich ein Aufbau, welcher keine Zuführungen an der Unterseite des Methanolreformers aufweist, sondern einen stabilen und festen Boden. Hierdurch kann der Reformer gerade in räumlich beengten Bereichen, zum Beispiel an Bord eines Unterseebootes gut installiert werden. Insbesondere kann der Methanolreformer schwingungsgedämpft und schocksicher gelagert werden und erfüllt somit die besonderen Anforderungen an ein Unterseeboot.

Unter koaxialem Reaktionsrohr werden zwei ineinander gesteckte Leitungen mit verschiedenem Durchmesser verstanden. Der Durchmesser der Leitungen ist so gewählt, dass sich zwischen den Leitungen einen Zwischenraum bildet. Der sich bei dieser Anordnung ergebende Zwischenraum zwischen der äußeren Leitung und der inneren Leitung wird als äußerer Rohrbereich bezeichnet und der Raum in der inneren Leitung wird als innerer Rohrbereich bezeichnet.

In einer weiteren Ausführungsform der Erfindung ist der äußere Rohrbereich mit einem Katalysator gefüllt. Als Katalysatoren können beispielsweise Intermetallverbindungen wie beispielsweise Ni₃Al, CuZn oder NiCr, Edelmetall-Katalysatoren, Oxide, wie zum Beispiel Kupfer-Zink-Aluminium-Mischoxid, oder Metallkatalysatoren auf oxidischen Trägern, beispielsweise Cu/Zn, Cu/Cr oder Cu/Zr auf Al₂O₃ eingesetzt werden.

In einer weiteren Ausführungsform der Erfindung weist der Reaktionsbereich einen Wassereinlass und einen Wasserauslass auf. Hierdurch kann der Reaktionsbereich mit Wasser als Wärmeträger beheizt bzw. temperiert werden. Da die Reaktion von Methanol und Wasser zu Wasserstoff, Kohlendioxid und Kohlenmonoxid endotherm ist und nur bei erhöhter Temperatur erfolgt, ist dieses vorteilhaft.

In einer weiteren Ausführungsform der Erfindung wird Wasser gasförmig durch den Wassereinlass eingeleitet und flüssiges Wasser durch den Wasserauslass ausgelassen. Der Wassereinlass ist hierzu vorzugsweise im oberen Bereich des Reaktionsbereichs angeordnet, der Wasserauslass im unteren Bereich des Reaktionsbereichs. Hierdurch kann neben der Wärmekapazität des Wassers auch die Verdampfungsenthalpie zum Heizen genutzt werden.

Erfindungsgemäß sind der Reaktionsbereich, der Beschickungsbereich und der Auslassbereich in einem Gehäuse angeordnet. Bevorzugt handelt es sich um ein zylinderförmiges Gehäuse.

Erfindungsgemäß ist der Auslassbereich über dem Beschickungsbereich angeordnet. Die umgekehrte Anordnung ist genauso möglich, die daraus folgenden weiteren Ausführungsformen ergeben sich dann entsprechend.

Erfindungsgemäß sind der Reaktionsbereich und der Beschickungsbereich durch einen ersten Trennboden getrennt und der Beschickungsbereich und der Auslassbereich sind durch einen zweiten Trennboden getrennt. Der äußere Rohrbereich ist mit dem ersten Trennboden verbunden und der innere Rohrbereich ist mit dem zweiten Trennboden verbunden. Im Ergebnis fließen die Reaktanden vom Beschickungsbereich zum Auslassbereich über den Reaktionsbereich. Erfindungsgemäß beinhaltet der Reaktionsbereich eine Vorwärmvorrichtung und eine Reaktionseinrichtung, die beide mit dem Beschickungsbereich verbunden sind. Die Vorwärmvorrichtung und die Reaktionseinrichtung sind derart angeordnet, dass die Reaktanden zunächst durch die Vorwärmvorrichtung im Reaktionsbereich fließen, dann durch den Beschickungsbereich, um über die Reaktionseinrichtung im Reaktionsbereich zum Auslassbereich geleitet zu werden.

In einer weiteren Ausführungsform der Erfindung ist das wenigstens eine erste koaxiale Reaktionsrohr senkrecht angeordnet. Besonders bevorzugt sind der Beschickungsbereich oberhalb des Reaktionsbereichs und der Auslassbereich oberhalb des Beschickungsbereichs angeordnet.

Erfindungsgemäß weist der Reaktionsbereich einen unteren Boden auf, wobei das wenigstens eine erste koaxiale Reaktionsrohr mit dem unteren Boden mit einer Schraubverbindung verbunden ist. Durch die Schraubverbindung mit dem unteren Boden wird ein Zug auf das wenigstens eine erste koaxiale Reaktionsrohr ausgeübt. Durch diesen Zug wird erreicht, dass der Methanolreformer eine höhere Schockfestigkeit aufweist. Hierdurch ist ein entsprechender Methanolreformer besonders für den Einsatz im militärischen Bereich, insbesondere auf Wasserfahrzeugen, insbesondere in Unterwasserfahrzeugen, geeignet. Durch diesen Effekt kann der untere Boden schwächer und somit dünner ausgeführt werden im Vergleich zu einem Methanolreformer ohne Zug über das wenigstens eine erste koaxiale Reaktionsrohr.

In einer weiteren Ausführungsform der Erfindung verbindet die Schraubverbindung den inneren Rohrbereich mit dem äußeren Rohrbereich. Somit dient die Schraubverbindung gleichzeitig zum Verschließen des wenigstens einen ersten koaxialen Reaktionsrohrs als auch zum Umlenken des Gasstroms aus dem äußeren Rohrbereich in den inneren Rohrbereich.

In einer weiteren Ausführungsform der Erfindung ist der Katalysator nach Entfernen der Schraubverbindung aus dem äußeren Rohrbereich entfernbar oder in den äußeren Rohrbereich einbringbar. Da der Katalysator üblicherweise innerhalb der Lebensdauer eines Reformers gewechselt werden muss, besteht die Notwendigkeit des Zugangs zum äußeren Rohrbereich, der durch die Schraubverbindung leicht gewährleistet werden kann. Nach Entfernen der Schraubverbindung kann zunächst der verbrauchte Katalysator aus dem äußeren Rohrbereich entfernt und anschließend neuer Katalysator eingebracht werden. Anschließend wird die Schraubverbindung wieder eingebracht und das wenigstens eine erste koaxiale Reaktionsrohr damit wieder verschlossen. Zum Einfüllen des Katalysators wird vorzugsweise eine Vorrichtung verwendet, welche sicherstellt, dass der innere Rohrbereich nicht mit Katalysator gefüllt wird.

In einer weiteren Ausführungsform der Erfindung ist der Katalysator ausschließlich im äußeren Rohrbereich angeordnet. Durch die ausschließliche Anordnung im äußeren Rohrbereich und beispielsweise nicht im Beschickungsbereich wird eine gleichmäßige Temperatur im Bereich des Katalysators und somit eine gleichmäßige Umsetzung des Methanol-Wasser-Gemisches erzielt. Zugleich wird der Einsatz von Katalysator an weniger aktiven Bereichen vermieden und so wertvoller Katalysator eingespart.

In einer weiteren Ausführungsform der Erfindung wird der äußere Rohrbereich auf einer Temperatur von wenigstens 230 °C, bevorzugt von wenigstens 250 °C, besonders bevorzugt von 270 °C gehalten.

In einer weiteren Ausführungsform der Erfindung wird der äußere Rohrbereich auf einer Temperatur von höchstens 310 °C, bevorzugt von höchstens 290 °C, besonders bevorzugt von 280 °C gehalten.

In einer weiteren Ausführungsform der Erfindung wird der Reaktionsbereich mit Wasserdampf mit einer Temperatur von etwa 300 °C und einem Druck zwischen 6 MPa und 10 MPa beheizt. Hierdurch dann die Verdampfungsenthalpie zum Heizen genutzt werden. Durch den Druck wird gleichzeitig die Temperatur der flüssigen Phase eingestellt, welche sich aus dem Phasendiagramm von Wasser ergibt.

In einer weiteren Ausführungsform der Erfindung sind im Reaktionsbereich wenigstens 20 koaxiale Reaktionsrohre, bevorzugt wenigstens 50 koaxiale Reaktionsrohre, besonders bevorzugt wenigstens 100 koaxiale Reaktionsrohre angeordnet.

In einer weiteren Ausführungsform der Erfindung sind im Reaktionsbereich höchstens 500 koaxiale Reaktionsrohre, bevorzugt höchstens 300 koaxiale Reaktionsrohre, besonders bevorzugt höchstens 200 koaxiale Reaktionsrohre angeordnet sind.

In einer weiteren Ausführungsform der Erfindung weist der Katalysator eine durchschnittliche Korngröße von maximal 4 mm, bevorzugt von 2 mm, besonders bevorzugt von 1,5 mm auf. Dieses vermeidet insbesondere Bypassströmungen in nicht mit Katalysator gefüllten Bereichen.

In einer weiteren Ausführungsform der Erfindung weist der Katalysator eine durchschnittliche Korngröße von mindestens 0,1 mm, bevorzugt von 0,3 mm, besonders bevorzugt von 0,8 mm auf.

Erfindungsgemäß ist im Reaktionsbereich eine Vorwärmvorrichtung zum Vorwärmen des Methanol-Wasser-Gemisches angeordnet. Durch das Vorwärmen innerhalb des Reaktionsbereichs gelangt das Methanol-Wasser-Gemisch mit der exakt richtigen Temperatur des Reaktionsbereichs auf den Katalysator im äußeren Rohrbereich, wobei der Katalysator im äußeren Rohrbereich die gleiche Temperatur aufweist. Zur Änderung der Temperatur im Katalysator kommt es somit nur durch die Reaktionsenthalpie.

In einer weiteren Ausführungsform der Erfindung ist die Vorwärmvorrichtung mit dem Beschickungsbereich verbunden und die Vorwärmvorrichtung weißt einen Eingang für das Methanol-Wasser-Gemisch auf.

In einer weiteren Ausführungsform der Erfindung besteht die Vorwärmvorrichtung aus mehreren Wärmetauschrohren, die jede für sich mit dem Beschickungsbereich verbunden sind. Jedes der Wärmetauschrohre kann so angeordnet sein, dass die Durchflussrichtung überwiegend senkrecht zur Hauptflussrichtung des Erwärmungsmediums ist.

In einer weiteren Ausführungsform der Erfindung ist die Vorwärmvorrichtung zum Vorwärmen eines Methanol-Wasser-Gemisches von wenigstens 15 °C, bevorzugt von wenigstens 100 °C, besonders bevorzugt von wenigstens 175 °C ausgelegt ist. Besonders einfach ist natürlich die Verwendung eines nicht vorgewärmten Methanol-Wasser-Gemisches mit etwa 20 °C. Dieses kann jedoch zu einer Veränderung der Temperatur des Reaktionsbereichs führen. Für eine kompakte Gesamtbauweise ist daher die Verwendung von nicht vorgeheiztem Methanol-Wasser-Gemisch vorteilhaft, zur Vereinfachung der Prozessführung die Verwendung von vorgeheiztem Methanol-Wasser-Gemisch.

In einer weiteren Ausführungsform der Erfindung ist die Vorwärmvorrichtung zum Vorwärmen eines Methanol-Wasser-Gemisches so im Reaktionsbereich angeordnet, dass neues (kaltes) Methanol-Wasser-Gemisch im oberen Bereich des Reaktionsbereichs eingeleitet wird, wobei der obere Bereich des Reaktionsbereichs mit gasförmigen Wasser gewärmt wird. Hierdurch kommt das kalte Methanol-Wasser-Gemisch mit dem Wasserdampf wärmetechnisch in Kontakt, wobei der Wasserdampf durch Kondensation eine vergleichsweise große Wärmemenge an das Methanol-Wasser-Gemisch abgeben kann.

Erfindungsgemäß verläuft der Strömungsverlauf im äußeren Rohrbereich von oben nach unten. Durch die abwärts gerichtete Strömung wird die Entstehung eines Wirbelbettes des Katalysators vermieden.

In einer weiteren Ausführungsform der Erfindung bestehen die Wände des Reaktionsbereichs, die Wände des Beschickungsbereichs und die Wände des Auslassbereichs sowie das wenigstens eine erste koaxiale Reaktionsrohr aus dem gleichen Material. Hierdurch haben diese die gleichen thermischen Ausdehnungseigenschaften und Korrosionseigenschaften, was die Lebensdauer des Methanolreformers erhöht.

In einer weiteren Ausführungsform der Erfindung sind der Beschickungsbereich und der äußere Rohrbereich durch ein Lochblech getrennt. Durch das Lochblech wird ein Austreten des Katalysators in den Beschickungsbereich vermieden. Dieses ist insbesondere wichtig, da der Methanolreformer zum Befüllen des äußeren Rohrbereichs mit Katalysator vorteilhafter Weise um 180° gedreht wird, wodurch der Beschickungsbereich unter dem Reaktionsbereich zum Liegen kommt. Ohne das Lochblech würde der Katalysator direkt in den Beschickungsbereich gefüllt werden. Da der Beschickungsbereich jedoch nicht geheizt wird, sollte hier kein Katalysator angeordnet sein, da ansonsten hier angeordneter Katalysator das Methanol-Wasser-Gemisch durch Reaktion am Katalysator gekühlt werden würde. Dieses gekühlte Gasgemisch würde dann mit zu geringer Temperatur auf den Katalysator im äußeren Rohrbereich gegeben werden, wodurch die Effektivität des Methanolreformers gesenkt werden würde.

In einer weiteren Ausführungsform der Erfindung weist der Methanolreformer einen Wasserstoffabscheider und einen Brenner auf, wobei dem Brenner das vom Wasserstoff abgereicherte Restgas des Wasserstoffabscheiders zugeführt wird. Üblicherweise werden nur etwa 90 % des Wasserstoffs abgetrennt und einer Brennstoffzelle zugeführt, da ein höherer Abtrennungsgrad nicht wirtschaftlich ist. Das Restgas mit Wasserstoff und Kohlenmonoxid wird mit Sauerstoff verbrannt, um die für den Prozess notwendige Energie zumindest teilweise zu erzeugen.

Die kompakte und stabile Bauweise des erfindungsgemäßen Methanolreformers macht diesen bevorzugt geeignet für die Verwendung an Bord eines Wasserfahrzeugs, insbesondere an Bord eines Unterseeboots.

Nachfolgend ist der erfindungsgemäße Methanolreformer anhand eines in den Zeichnungen dargestellten Ausführungsbeispiels näher erläutert.
- Fig. 1: schematischer Querschnitt durch einen Methanolreformer
- Fig. 2: Aufsicht auf eine Schraubverbindung

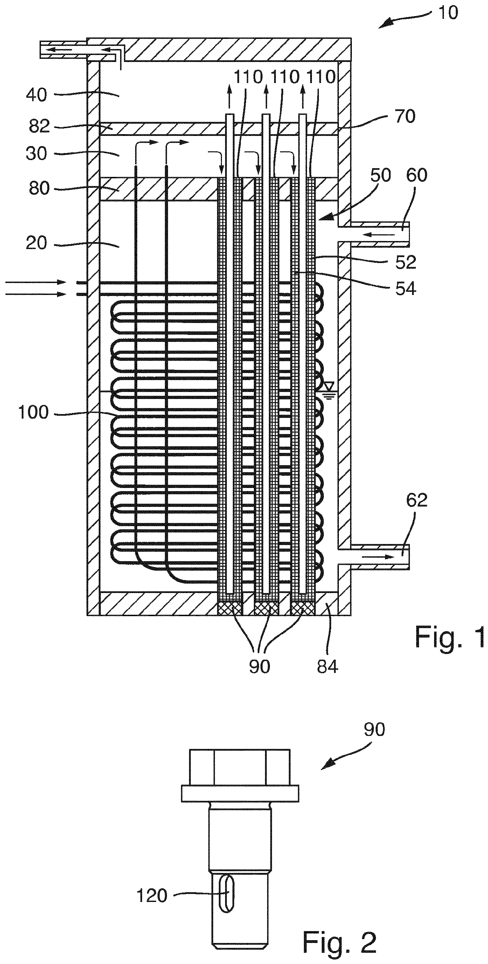

In Fig. 1 ist ein Methanolreformer 10 im schematischen Querschnitt gezeigt. Die Fig. 1 ist nicht maßstabsgerecht, um die Erkennbarkeit zu gewährleisten.

Der Methanolreformer 10 weist einen Reaktionsbereich 20, einen darüber angeordneten Beschickungsbereich 30 und einen darüber angeordneten Auslassbereich 40 auf. Im Reaktionsbereich befinden sich beispielhaft drei koaxiale Reaktionsrohre 50, welche einen äußeren Rohrbereich 52 und einen inneren Rohrbereich 54 aufweisen. Beispielsweise verfügt der Methanolreformer 10 über 200 koaxiale Reaktionsrohre 50, welche senkrecht im Reaktionsbereich 20 angeordnet sind. Der Reaktionsbereich wird mittels Wasser beheizt, welches gasförmig bei ca. 300 °C und 8 MPa durch den Wassereinlass 60 eingeführt wird. Das Wasser kondensiert an den koaxialen Reaktionsrohren 50. Beispielsweise ist der Reaktionsbereich wie gezeigt zur Hälfte mit flüssigem Wasser gefüllt, welches durch den Wasserauslass 62 entfernt wird. Der Reaktionsbereich 20, der Beschickungsbereich 30 und der Auslassbereich 40 sind in einem Gehäuse 70 angeordnet. Der Reaktionsbereich 20 und der Beschickungsbereich 30 sind durch einen ersten Trennboden 80 voneinander gasdicht getrennt. Der Beschickungsbereich 30 und der Auslassbereich 40 sind durch einen zweiten Trennboden 82 voneinander gasdicht getrennt. Die Außenwand des äußeren Rohrbereichs 52 ist mit dem ersten Trennboden 80 verbunden, sodass Methanol-Wasser-Gemisch aus dem Beschickungsbereich 30 in den äußeren Rohrbereich 52, welcher mit Katalysator gefüllt ist, eingeleitet wird. Ebenso ist die Außenwand des inneren Rohrbereichs 54 mit dem zweiten Trennboden 82 verbunden, sodass reformiertes Gasgemisch aus dem inneren Rohrbereich 54 in den Auslassbereich 40 gelangen kann. Das Gas kann durch die Schraubverbindung 90 aus dem äußeren Rohrbereich 52 in den inneren Rohrbereich 54 gelangen. Gleichzeitig wird durch die Schraubverbindung 90 das koaxiale Reaktionsrohr schocksicher mit dem unteren Boden 84 verbunden. Durch Entfernen der Schraubverbindung 90 kann der Katalysator aus dem äußeren Rohrbereich 52 entfernt und Katalysator ausgetauscht werden. Um das Methanol-Wasser Gemisch vorzuwärmen weist der Methanolreformer 10 eine Vorwärmvorrichtung 100 auf, welche hier beispielhaft aus zwei Wärmetauschrohren besteht. Alternativ kann die Vorwärmevorrichtung auch nur eine Verbindung durch das Gehäuse 70 aufweisen und sich erst im Inneren des Reaktionsbereichs 10 beispielsweise in zwei, drei oder vier Wärmetauschrohre aufspalten. Im Übergang zwischen dem Beschickungsbereich 30 und dem äußeren Rohrbereich 52 sind Lochbleche 110 angeordnet, welche Gas durchlassen, aber ein Eindringen von Katalysator in den Beschickungsbereich 30 verhindern, selbst wenn der Methanolreformer zur Beladung mit Katalysator umgedreht wird.

Fig. 2 zeigt eine Schraubverbindung 90 in einer vergrößerten Darstellung. Die Schraubverbindung 90 weist eine Verbindung 120 auf, durch welche der äußere Rohrbereich 52 und der innere Rohrbereich 54 miteinander verbunden sind, sodass das am Katalysator reagierte Gasgemisch abgeführt werden kann. Die Verbindung 120 ist vorteilhaft so ausgeführt, dass kein Katalysator aus dem äußeren Rohrbereich 52 in den inneren Rohrbereich 54 gelangen kann.

### Bezugszeichen

- 10: Methanolreformer
- 20: Reaktionsbereich
- 30: Beschickungsbereich
- 40: Auslassbereich
- 50: koaxiales Reaktionsrohr
- 52: äußerer Rohrbereich
- 54: innerer Rohrbereich
- 60: Wassereinlass
- 62: Wasserauslass
- 70: Gehäuse
- 80: erster Trennboden
- 82: zweiter Trennboden
- 84: unterer Boden
- 90: Schraubverbindung
- 100: Vorwärmvorrichtung
- 110: Lochblech
- 120: Verbindung

## Patentansprüche

1. Methanolreformer (10) mit einem Reaktionsbereich (20), einem Beschickungsbereich (30) und einem Auslassbereich (40), wobei der Reaktionsbereich (20), der Beschickungsbereich (30) und der Auslassbereich (40) übereinander angeordnet sind, wobei der Reaktionsbereich (20) unten angeordnet ist, wobei im Reaktionsbereich (20) wenigstens ein erstes koaxiales Reaktionsrohr (50) senkrecht angeordnet ist, wobei das wenigstens eine erste koaxiale Reaktionsrohr (50) einen äußeren Rohrbereich (52) und einen inneren Rohrbereich (54) aufweist, wobei der äußere Rohrbereich (52) mit dem Beschickungsbereich (30) verbunden ist und der innere Rohrbereich (54) mit dem Auslassbereich (40) verbunden ist, **dadurch gekennzeichnet, dass** im Reaktionsbereich (20) eine Vorwärmvorrichtung (100) zum Vorwärmen des Methanol-Wasser-Gemisches angeordnet ist, wobei der Reaktionsbereich (20) eine Vorwärmvorrichtung (100) und eine Reaktionseinrichtung beinhaltet, wobei die Vorwärmvorrichtung (100) und die Reaktionseinrichtung mit dem Beschickungsbereich (30) verbunden sind, wobei die Vorwärmvorrichtung (100) und die Reaktionseinrichtung derart angeordnet sind, dass die Reaktanden zunächst durch die Vorwärmvorrichtung (100) im Reaktionsbereich (20) fließen, dann durch den Beschickungsbereich (30), um über die Reaktionseinrichtung im Reaktionsbereich (20) zum Auslassbereich geleitet zu werden, wobei der Reaktionsbereich (20), der Beschickungsbereich (30) und der Auslassbereich (40) in einem Gehäuse (70) angeordnet sind, wobei der Auslassbereich (40) über dem Beschickungsbereich (30) angeordnet ist, wobei der Reaktionsbereich (20) und der Beschickungsbereich (30) durch einen ersten Trennboden (80) getrennt sind, der Beschickungsbereich (30) und der Auslassbereich (40) durch einen zweiten Trennboden (82) getrennt sind, wobei der äußere Rohrbereich (52) mit dem ersten Trennboden (80) verbunden ist und der innere Rohrbereich (54) mit dem zweiten Trennboden (82) verbunden ist, wobei der Strömungsverlauf im äußeren Rohrbereich (52) von oben nach unten verläuft, wobei der Reaktionsbereich (20) einen unteren Boden (84) aufweist, wobei das wenigstens eine erste koaxiale Reaktionsrohr (50) mit dem unteren Boden (84) mit einer Schraubverbindung (90) verbunden ist.

2. Methanolreformer (10) nach Anspruch 1, **dadurch gekennzeichnet, dass** der äußere Rohrbereich (52) des wenigstens einen ersten koaxialen Reaktionsrohrs mit einem Katalysator gefüllt ist.

3. Methanolreformer (10) nach einem der vorstehenden Ansprüche, **dadurch gekennzeichnet, dass** der Reaktionsbereich (20) einen Wassereinlass (60) und einen Wasserauslass (62) aufweist.

4. Methanolreformer (10) nach Anspruch 3, **dadurch gekennzeichnet, dass** Wasser gasförmig durch den Wassereinlass (60) eingeleitet und flüssiges Wasser durch den Wasserauslass (62) ausgelassen wird.

5. Methanolreformer (10) nach einem der vorstehenden Ansprüche, **dadurch gekennzeichnet, dass** die Schraubverbindung (90) den inneren Rohrbereich (54) mit dem äußeren Rohrbereich (52) verbindet.

6. Methanolreformer (10) nach einem der vorstehenden Ansprüche, **dadurch gekennzeichnet, dass** der Katalysator nach Entfernen der Schraubverbindung (90) aus dem äußeren Rohrbereich (52) entfernbar oder in den äußeren Rohrbereich (52) einbringbar ist.

7. Methanolreformer (10) nach einem der vorstehenden Ansprüche, **dadurch gekennzeichnet, dass** der Katalysator ausschließlich im äußeren Rohrbereich (52) angeordnet ist.

8. Methanolreformer (10) nach einem der vorstehenden Ansprüche, **dadurch gekennzeichnet, dass** der äußere Rohrbereich (52) auf einer Temperatur von wenigstens 230 °C, bevorzugt von wenigstens 250 °C, besonders bevorzugt von 270 °C gehalten wird.

9. Methanolreformer (10) nach einem der vorstehenden Ansprüche, **dadurch gekennzeichnet, dass** der äußere Rohrbereich (52) auf einer Temperatur von höchstens 310 °C, bevorzugt von höchstens 290 °C, besonders bevorzugt von 280 °C gehalten wird.

10. Methanolreformer (10) nach einem der vorstehenden Ansprüche, **dadurch gekennzeichnet, dass** der Reaktionsbereich (20) mit Wasserdampf mit einer Temperatur von etwa 300 °C und einem Druck zwischen 6 MPa und 10 MPa beheizt wird.

11. Methanolreformer (10) nach einem der vorstehenden Ansprüche, **dadurch gekennzeichnet, dass** im Reaktionsbereich (20) wenigstens 20 koaxiale Reaktionsrohre (50), bevorzugt wenigstens 50 koaxiale Reaktionsrohre (50), besonders bevorzugt wenigstens 100 koaxiale Reaktionsrohre (50) angeordnet sind.

12. Methanolreformer (10) nach einem der vorstehenden Ansprüche, **dadurch gekennzeichnet, dass** im Reaktionsbereich (20) höchstens 500 koaxiale Reaktionsrohre (50), bevorzugt höchstens 300 koaxiale Reaktionsrohre (50), besonders bevorzugt höchstens 200 koaxiale Reaktionsrohre (50) angeordnet sind.

13. Methanolreformer (10) nach einem der vorstehenden Ansprüche, **dadurch gekennzeichnet, dass** der Katalysator eine durchschnittliche Korngröße von maximal 4 mm, bevorzugt von 2 mm, besonders bevorzugt von 1,5 mm aufweist.

14. Methanolreformer (10) nach einem der vorstehenden Ansprüche, **dadurch gekennzeichnet, dass** der Katalysator eine durchschnittliche Korngröße von mindestens 0,1 mm, bevorzugt von 0,3 mm, besonders bevorzugt von 0,8 mm aufweist.

15. Methanolreformer (10) nach einem der vorstehenden Ansprüche, **dadurch gekennzeichnet, dass** die Wände des Reaktionsbereichs (20), die Wände des Beschickungsbereichs (30) und die Wände des Auslassbereichs (40) sowie das wenigstens eine erste koaxiale Reaktionsrohr (50) aus dem gleichen Material bestehen.

16. Methanolreformer (10) nach einem der vorstehenden Ansprüche, **dadurch gekennzeichnet, dass** der Beschickungsbereich (30) und der äußere Rohrbereich (52) durch ein Lochblech (110) getrennt sind.

17. Methanolreformer (10) nach einem der vorstehenden Ansprüche, **dadurch gekennzeichnet, dass** der Methanolreformer (10) einen Wasserstoffabscheider und einen Brenner aufweist, wobei dem Brenner das vom Wasserstoff abgereicherte Restgas des Wasserstoffabscheiders zugeführt wird.

## Claims

1. Methanol reformer (10) having a reaction region (20), a charging region (30) and a discharge region (40), wherein the reaction region (20), the charging region (30) and the discharge region (40) are arranged one above the other, wherein the reaction region (20) is arranged at the bottom, wherein at least one first coaxial reaction tube (50) is arranged vertically in the reaction region (20), wherein the at least one first coaxial reaction tube (50) comprises an outer tube region (52) and an inner tube region (54), wherein the outer tube region (52) is connected to the charging region (30) and the inner tube region (54) is connected to the discharge region (40), **characterized in that** a preheating device (100) for preheating the methanol-water mixture is arranged in the reaction region (20), wherein the reaction region (20) comprises a preheating device (100) and a reaction device, wherein the preheating device (100) and the reaction device are connected to the charging region (30), wherein the preheating device (100) and the reaction device are arranged such that the reactants first of all flow through the preheating device (100) in the reaction region (20), then through the charging region (30), to be passed to the discharge region via the reaction device in the reaction region (20), wherein the reaction region (20), the charging region (30) and the discharge region (40) are arranged in a housing (70), wherein the discharge region (40) is arranged above the charging region (30), wherein the reaction region (20) and the charging region (30) are separated by a first separating tray (80), the charging region (30) and the discharge region (40) are separated by a second separating tray (82), wherein the outer tube region (52) is connected to the first separating tray (80) and the inner tube region (54) is connected to the second separating tray (82), wherein the course of flow in the outer tube region (52) runs from top to bottom, wherein the reaction region (20) comprises a lower base (84), wherein the at least one first coaxial reaction tube (50) is connected to the lower base (84) by a screw connection (90).

2. Methanol reformer (10) according to Claim 1, **characterized in that** the outer tube region (52) of the at least one first coaxial reaction tube is filled with a catalyst.

3. Methanol reformer (10) according to one of the preceding claims, **characterized in that** the reaction region (20) comprises a water inlet (60) and a water outlet (62).

4. Methanol reformer (10) according to Claim 3, **characterized in that** water is introduced as a gas through the water inlet (60) and liquid water is discharged through the water outlet (62).

5. Methanol reformer (10) according to one of the preceding claims, **characterized in that** the screw connection (90) connects the inner tube region (54) to the outer tube region (52).

6. Methanol reformer (10) according to one of the preceding claims, **characterized in that** after removing the screw connection (90), the catalyst can be removed from the outer tube region (52) or can be introduced into the outer tube region (52).

7. Methanol reformer (10) according to one of the preceding claims, **characterized in that** the catalyst is arranged exclusively in the outer tube region (52).

8. Methanol reformer (10) according to one of the preceding claims, **characterized in that** the outer tube region (52) is kept at a temperature of at least 230°C, preferably of at least 250°C, particularly preferably of 270°C.

9. Methanol reformer (10) according to one of the preceding claims, **characterized in that** the outer tube region (52) is kept at a temperature of not more than 310 °C, preferably of not more than 290 °C, particularly preferably of 280 °C.

10. Methanol reformer (10) according to one of the preceding claims, **characterized in that** the reaction region (20) is heated using steam at a temperature of about 300°C and a pressure between 6 MPa and 10 MPa.

11. Methanol reformer (10) according to one of the preceding claims, **characterized in that** at least 20 coaxial reaction tubes (50), preferably at least 50 coaxial reaction tubes (50), particularly preferably at least 100 coaxial reaction tubes (50), are arranged in the reaction region (20).

12. Methanol reformer (10) according to one of the preceding claims, **characterized in that** not more than 500 coaxial reaction tubes (50), preferably not more than 300 coaxial reaction tubes (50), particularly preferably not more than 200 coaxial reaction tubes (50), are arranged in the reaction region (20).

13. Methanol reformer (10) according to one of the preceding claims, **characterized in that** the catalyst exhibits an average grain size of at most 4 mm, preferably of 2 mm, particularly preferably of 1.5 mm.

14. Methanol reformer (10) according to one of the preceding claims, **characterized in that** the catalyst exhibits an average grain size of at least 0.1 mm, preferably of 0.3 mm, particularly preferably of 0.8 mm.

15. Methanol reformer (10) according to one of the preceding claims, **characterized in that** the walls of the reaction region (20), the walls of the charging region (30) and the walls of the discharge region (40) as well as the at least one first coaxial reaction tube (50) consist of the same material.

16. Methanol reformer (10) according to one of the preceding claims, **characterized in that** the charging region (30) and the outer tube region (52) are separated by a perforated plate (110).

17. Methanol reformer (10) according to one of the preceding claims, **characterized in that** the methanol reformer (10) comprises a hydrogen liberator and a burner, wherein the residual gas of the hydrogen liberator stripped of the hydrogen is supplied to the burner.

## Revendications

1. Reformeur de méthanol (10) présentant une zone de réaction (20), une zone d'alimentation (30) et une zone d'échappement (40),
la zone de réaction (20), la zone d'alimentation (30) et la zone d'échappement (40) étant disposées les unes au-dessus des autres,
la zone de réaction (20) étant disposée dans le bas,
un ou plusieurs premiers tubes coaxiaux de réaction (50) étant disposés à la verticale dans la zone de réaction (20),
le ou les premiers tubes coaxiaux de réaction (50) présentant une partie tubulaire extérieure (52) et une partie tubulaire intérieure (54),
la partie tubulaire extérieure (52) étant raccordée à la zone d'alimentation (30) et la partie tubulaire intérieure (54) à la zone d'échappement (40),
**caractérisé en ce qu'**
un ensemble de préchauffage (100) qui préchauffe le mélange de méthanol et d'eau est disposé dans la zone de réaction (20),
la zone de réaction (20) contenant un ensemble de préchauffage (100) et un dispositif de réaction,
l'ensemble de préchauffage (100) et le dispositif de réaction étant raccordés à la zone d'alimentation (30),
l'ensemble de préchauffage (100) et le dispositif de réaction étant disposés de telle sorte que les réactifs s'écoulent d'abord à travers l'ensemble de préchauffage (100) dans la zone de réaction (20) et ensuite à travers la zone d'alimentation (30) avant d'être envoyés vers la zone d'échappement en traversant le dispositif de réaction dans la zone de réaction (20),
la zone de réaction (20), la zone d'alimentation (30) et la zone d'échappement (40) étant disposées dans un carter (70),
la zone d'échappement (40) étant disposée au-dessus de la zone d'alimentation (30),
la zone de réaction (20) et la zone d'alimentation (30) étant séparées par un premier cloison de fond (80),
la zone d'alimentation (30) et la zone d'échappement (40) étant séparées par un deuxième cloison de fond (82),
la partie tubulaire extérieure (52) étant reliée au premier cloison de fond (80) et la partie tubulaire intérieure (54) au deuxième cloison de fond (82),
l'écoulement s'effectuant du haut vers le bas dans la partie tubulaire extérieure (52),
la zone de réaction (20) présentant un fond inférieur (84) et
le ou les premiers tubes coaxiaux de réaction (50) étant reliés au fond inférieur (84) par une liaison filetée (90).

2. Reformeur de méthanol (10) selon la revendication 1, **caractérisé en ce que** la partie tubulaire extérieure (52) du ou des premiers tubes de réaction coaxiaux est remplie d'un catalyseur.

3. Reformeur de méthanol (10) selon l'une des revendications précédentes, **caractérisé en ce que** la zone de réaction (20) présente une admission d'eau (60) et une sortie d'eau (62).

4. Reformeur de méthanol (10) selon la revendication 3, **caractérisé en ce que** de l'eau est introduite en phase gazeuse par l'admission d'eau (60) et de l'eau en phase liquide est extraite par la sortie d'eau (62).

5. Reformeur de méthanol (10) selon l'une des revendications précédentes, **caractérisé en ce que** la liaison filetée (90) relie la partie tubulaire intérieure (54) à la partie tubulaire extérieure (52).

6. Reformeur de méthanol (10) selon l'une des revendications précédentes, **caractérisé en ce qu'** après l'enlèvement de la liaison filetée (90), le catalyseur peut être enlevé hors de la partie tubulaire extérieure (52) ou être introduit dans la partie tubulaire extérieure (52).

7. Reformeur de méthanol (10) selon l'une des revendications précédentes, **caractérisé en ce que** le catalyseur est disposé exclusivement dans la partie tubulaire extérieure (52).

8. Reformeur de méthanol (10) selon l'une des revendications précédentes, **caractérisé en ce que** la partie tubulaire extérieure (52) est maintenue à une température d'au moins 230°C, de préférence d'au moins 250°C et de façon particulièrement préférable d'au moins 270°C.

9. Reformeur de méthanol (10) selon l'une des revendications précédentes, **caractérisé en ce que** la partie tubulaire extérieure (52) est maintenue à une température d'au plus 310°C, de préférence d'au plus 290°C et de façon particulièrement préférable d'au plus 280°C.

10. Reformeur de méthanol (10) selon l'une des revendications précédentes, **caractérisé en ce que** la zone de réaction (20) est chauffée par de la vapeur d'eau à une température d'environ 300°C et à une pression comprise entre 6 MPa et 10 MPa.

11. Reformeur de méthanol (10) selon l'une des revendications précédentes, **caractérisé en ce que** dans la zone de réaction (20) sont disposés au moins 20 tubes coaxiaux de réaction (50), de préférence au moins 50 premiers tubes coaxiaux de réaction (50) et de façon particulièrement préférable au moins 100 tubes coaxiaux de réaction (50).

12. Reformeur de méthanol (10) selon l'une des revendications précédentes, **caractérisé en ce que** dans la zone de réaction (20) sont disposés au plus 500 tubes coaxiaux de réaction (50), de préférence au plus 300 tubes coaxiaux de réaction (50) et de façon particulièrement préférable au plus 200 tubes coaxiaux de réaction (50).

13. Reformeur de méthanol (10) selon l'une des revendications précédentes, **caractérisé en ce que** le catalyseur présente une granulométrie moyenne d'au plus 4 mm, de préférence d'au plus 2 mm et de façon particulièrement préférable d'au plus 1,5 mm.

14. Reformeur de méthanol (10) selon l'une des revendications précédentes, **caractérisé en ce que** le catalyseur présente une granulométrie moyenne d'au moins 0,1 mm, de préférence d'au moins 0,3 mm et de façon particulièrement préférable d'au moins 0,8 mm.

15. Reformeur de méthanol (10) selon l'une des revendications précédentes, **caractérisé en ce que** les parois de la zone de réaction (20), les parois de la zone d'alimentation (30), les parois de la zone d'échappement (40) ainsi que le ou les premiers tubes coaxiaux de réaction (50) sont constitués du même matériau.

16. Reformeur de méthanol (10) selon l'une des revendications précédentes, **caractérisé en ce que** la zone d'alimentation (30) et la partie tubulaire extérieure (52) sont séparées par une tôle perforée (110).

17. Reformeur de méthanol (10) selon l'une des revendications précédentes, **caractérisé en ce que** le reformeur de méthanol (10) présente un séparateur d'hydrogène et un brûleur, le gaz résiduel du séparateur d'hydrogène, réduit en fraction hydrogène, étant apporté au brûleur.
